# EUROPEAN PATENT APPLICATION

(11) **EP 4 369 325 A1**
(43) Date of publication of application: **15.05.2024**
(21) Application number: 23204563.3
(22) Date of filing: 19.10.2023
(51) Int. Cl.: G08G 1/0962, G08G 1/16, B60W 50/14, G08G 1/017, G08G 1/0967, G08G 1/00, G01C 21/36

(54) **DRIVING ASSISTANCE APPARATUS**

(30) Priority: 14.11.2022 JP 2022181937
(71) Applicant: Suzuki Motor Corporation, Hamamatsu-shi, Shizuoka 432-8611 (JP)
(72) Inventor: OZAWA, Naoyuki, Hamamatsu-shi, 432-8611 (JP)
(74) Representative: Haseltine Lake Kempner LLP

(57) **Abstract**

An object of the present invention is to prevent an alarm from frequently occurring when driving in a location where a large number of drivers are unfamiliar with a current location. A driving assistance apparatus 30 according to the present invention includes: an alarm generation unit 31 configured to generate an alarm in order to alert a driver of an own vehicle when a current location of the own vehicle and a location where another vehicle is mainly used are separated by a predetermined distance or more; and an alarm stop unit 32 configured to stop the alarm from the alarm generation unit 31 when it is predicted that the alarm from the alarm generation unit 31 frequently occurs. The alarm stop unit 32 stops the alarm from the alarm generation unit 31, so that it is possible to prevent the alarm from the alarm generation unit 31 from frequently occurring.

## Description

### TECHNICAL FIELD

The present invention relates to a driving assistance apparatus.

### BACKGROUND ART

In the related art, a driving assistance apparatus that assists driving of a driver has been known. Patent Literature 1 discloses a driving assistance apparatus that sets a vehicle-to-vehicle distance with another vehicle traveling around an own vehicle to a safe distance based on a familiarity degree of a driver of the other vehicle. Specifically, in the driving assistance apparatus in Patent Literature 1, the braking of the vehicle is controlled such that a target vehicle-to-vehicle distance with the other vehicle is set longer as the familiarity degree indicating the degree to which the driver of the other vehicle is accustomed to driving on a surrounding road is lower.

### CITATION LIST

### PATENT LITERATURE

Patent Literature 1: JP2018-180737A

### SUMMARY OF INVENTION

### TECHNICAL PROBLEM

However, in the driving assistance apparatus in Patent Literature 1, when driving in a location where a large number of distant vehicles travel, such as a tourist spot, it is assumed that the percentage of the drivers having a low familiarity degree increases, and the control may be frequently performed. In such a case, the driver of the own vehicle may feel frequent control annoying.

The present invention has been made in view of the above-described problems, and an object of the present invention is to prevent an alarm from frequently occurring when driving in a location where a large number of drivers are unfamiliar with a current location.

### SOLUTION TO PROBLEM

A driving assistance apparatus according to the present invention includes: an alarm generation unit configured to generate an alarm in order to alert a driver of an own vehicle when a current location of the own vehicle and a location where another vehicle is mainly used are separated by a predetermined distance or more; and an alarm stop unit configured to stop the alarm from the alarm generation unit when it is predicted that the alarm from the alarm generation unit frequently occurs.

### ADVANTAGEOUS EFFECTS OF INVENTION

According to the present invention, it is possible to prevent an alarm from frequently occurring when driving in a location where a large number of drivers are unfamiliar with a current location.

### BRIEF DESCRIPTION OF DRAWINGS

[FIG. 1] FIG. 1 is a diagram showing a configuration of a part of a vehicle including a driving assistance apparatus.
[FIG. 2] FIG. 2 is a diagram showing an example of an alarm.
[FIG. 3] FIG. 3 is a flowchart showing processing performed by the driving assistance apparatus.
[FIG. 4] FIG. 4 is a diagram showing an example of a notification from an alarm stop unit.

### DESCRIPTION OF EMBODIMENTS

A driving assistance apparatus 30 according to an embodiment of the present invention includes: an alarm generation unit 31 configured to generate an alarm in order to alert a driver of an own vehicle when a current location of the own vehicle and a location where another vehicle is mainly used are separated by a predetermined distance or more; and an alarm stop unit 32 configured to stop the alarm from the alarm generation unit 31 when it is predicted that the alarm from the alarm generation unit 31 frequently occurs. When driving in a location where a large number of drivers are unfamiliar with a current location, it is predicted that the alarm frequently occurs in order to alert the driver of the own vehicle. In such a case, the driver of the own vehicle can eliminate the annoyance due to frequent alarms by preventing the alarm from frequently occurring.

### First Embodiment

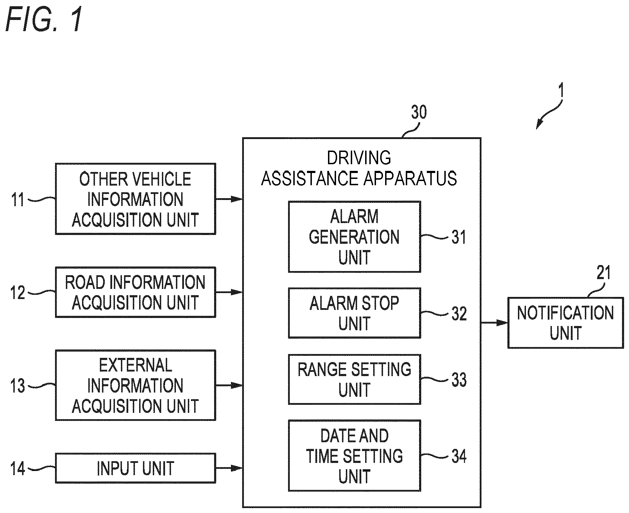

Hereinafter, the driving assistance apparatus 30 according to the present invention will be described with reference to the drawings. FIG. 1 is a diagram showing a configuration of a part of a vehicle 1 which is an own vehicle including a driving assistance apparatus 30.

The vehicle 1 includes an other vehicle information acquisition unit 11, a road information acquisition unit 12, an external information acquisition unit 13, an input unit 14, a notification unit 21, and the driving assistance apparatus 30. The vehicle 1 also includes a device that is generally provided in a vehicle, and the illustration and description of the device are omitted.

The other vehicle information acquisition unit 11 acquires information on another vehicle present around the vehicle 1 (the own vehicle). Specifically, the other vehicle information acquisition unit 11 acquires position information of a location where the other vehicle present around the vehicle 1 is mainly used. When the vehicle 1 is provided with a camera, the other vehicle information acquisition unit 11 reads home base information (a place name) displayed on a license plate (an automobile registration number mark and a vehicle number mark) from image information of the other vehicle captured by the camera. The other vehicle information acquisition unit 11 acquires the read home base information as the position information of the location where the other vehicle is mainly used. When a vehicle-to-vehicle communication device is provided in the vehicle 1, the other vehicle information acquisition unit 11 acquires information on an automobile inspection certificate included in the information on the other vehicle acquired by the vehicle-to-vehicle communication device. The other vehicle information acquisition unit 11 acquires information on an address of an owner or an address of a user from the information on the automobile inspection certificate as the position information of the location where another person is mainly used.

The road information acquisition unit 12 acquires position information of the own vehicle or acquires road information. Specifically, the road information acquisition unit 12 acquires the position information of the own vehicle by calculating latitude and longitude based on a radio wave received from a GPS satellite or acquiring information on the latitude and longitude from a base station. The road information acquisition unit 12 acquires the road information by reading the stored information. When the vehicle 1 is provided with a car navigation system, the road information acquisition unit 12 may acquire the position information and the road information of the own vehicle from the car navigation system.

The external information acquisition unit 13 acquires information from the outside via a communication device. Specifically, the external information acquisition unit 13 acquires from, an external server, position information and date and time information of a location where a large number of distant vehicles are predicted to travel. Here, the location where a large number of distant vehicles are predicted to travel is, for example, a location of a tourist spot or a location where an event such as a festival is held. The date and time at which a large number of distant vehicles are predicted to travel is a period and time in which an event is held.

The input unit 14 receives input from the driver of the vehicle 1 and transmits received information to the driving assistance apparatus 30. Specifically, the driver of the vehicle 1 inputs, using the input unit 14, the location and date and time at which a large number of distant vehicles are predicted to travel. The input unit 14 may be, for example, a touch panel or a microphone implemented integrally with a display provided in the vehicle 1.

The notification unit 21 gives a notification by displaying an alarm from the alarm generation unit 31, which will be described later, of the driving assistance apparatus 30 with characters or symbols, or sounding an alarm with a sound (including a voice). For example, a display unit such as a display or a meter panel or a speaker provided in the vehicle 1 may be used as the notification unit 21. When the vehicle 1 is provided with a car navigation system, a display or a speaker of the car navigation system can be used as the notification unit 21.

The driving assistance apparatus 30 assists driving of the vehicle 1 by the driver. For example, an electronic control unit (ECU) that controls the entire vehicle 1 is used as the driving assistance apparatus 30. The ECU includes at least one CPU and at least one memory, and functions as a so-called computer. The number of ECUs is not limited to one. A plurality of ECUs may be in cooperation with each other, or the ECU may be different from the ECU that controls the entire vehicle 1. The CPU of the ECU achieves functional components of the driving assistance apparatus 30 by executing a program stored in the memory.

The driving assistance apparatus 30 includes, as functional components, the alarm generation unit 31, the alarm stop unit 32, a range setting unit 33, and a date and time setting unit 34. The alarm generation unit 31 generates an alarm via the notification unit 21 in order to alert the driver of the own vehicle when driving in a location where a large number of drivers are unfamiliar with a current location. Specifically, when the current location of the own vehicle and a location where another vehicle is mainly used are separated by a predetermined distance or more, the alarm generation unit 31 generates an alarm via the notification unit 21 in order to alert the driver of the own vehicle. The alarm generation unit 31 receives position information of the current location of the own vehicle from the road information acquisition unit 12, and receives position information of the location where the other vehicle is mainly used from the other vehicle information acquisition unit 11.

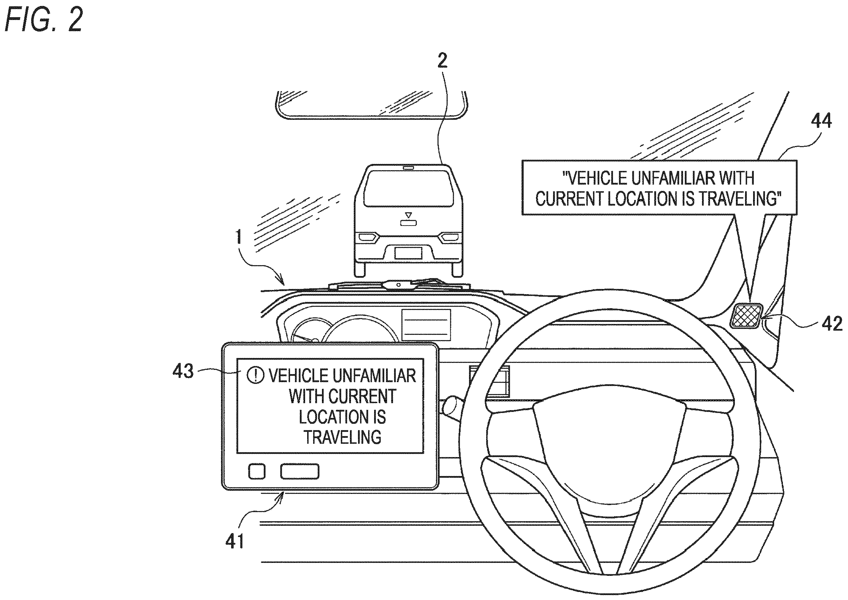

FIG. 2 is a diagram showing an example of an alarm from the alarm generation unit 31. Here, in terms of another vehicle 2 traveling ahead, it is assumed that the current location and the location where the other vehicle 2 is mainly used are separated by a predetermined distance or more. The vehicle 1 includes a display 41 and a speaker 42 as the notification unit 21. First, the alarm generation unit 31 receives the position information of the own vehicle from the road information acquisition unit 12, and receives the position information of the location where the other vehicle is mainly used from the other vehicle information acquisition unit 11. Next, the alarm generation unit 31 determines whether the position information of the own vehicle and the position information of the location where the other vehicle is mainly used are separated by a predetermined distance or more. Here, it is determined that the positions are separated by the predetermined distance or more.

The alarm generation unit 31 generates an alarm via the notification unit 21 according to a determination result in order to alert the driver of the own vehicle. Specifically, the alarm generation unit 31 displays a message 43 that "a vehicle unfamiliar with the current location is traveling" via the display 41. The alarm generation unit 31 emits a voice 44 that "a vehicle unfamiliar with the current location is traveling" via the speaker 42. The alarm generation unit 31 is not limited to a case of emitting a voice, and may emit a predetermined alarm sound.

The alarm generation unit 31 generates an alarm in this way, so that the driver of the own vehicle can recognize that an unfamiliar vehicle is traveling in a surrounding region. Therefore, the driver of the own vehicle can drive while paying attention to the unfamiliar vehicle. The alarm generation unit 31 similarly determines other vehicles present around the own vehicle, and generates an alarm for each of the other vehicles according to a determination result. As will be described later, the alarm function (the alert function) executed by the alarm generation unit 31 via the notification unit 21 is switched between ON and OFF.

The alarm stop unit 32 stops the alarm from the alarm generation unit 31. When driving in a location where a large number of distant vehicles travel, such as a tourist spot, it is assumed that there are a large number of other vehicles in which the position information of the own vehicle and the position information of the location where the other vehicles are mainly used are separated by a predetermined distance or more. In such a case, the alarm from the alarm generation unit 31 is predicted to frequently occur, and the driver of the own vehicle may feel the alarm annoying. When it is predicted that the alarm from the alarm generation unit 31 frequently occurs, the alarm stop unit 32 stops the alarm by turning off the alarm function of the alarm generation unit 31 from on.

The range setting unit 33 sets a stop range for stopping the alarm. Specifically, the range setting unit 33 sets, as the stop range, a range indicating a location where a large number of distant vehicles are predicted to travel, such as a location of a tourist spot or a location where an event such as a festival is held. Here, a method for setting the stop range by the range setting unit 33 will be described. As a first method, the range setting unit 33 sets a range indicating a location input by the driver of the own vehicle via the input unit 14 as the stop range. The driver or the like inputs in advance a location of a tourist spot or a location where an event such as a festival is held. In the first method, the stop range is set according to an input of the driver or the like. As a second method, when the driving assistance apparatus 30 is manufactured, the range setting unit 33 sets, as the stop range, a range indicating a location of a tourist spot or a location where an event such as a festival is held. In the second method, the stop range is set as a default. As a third method, the range setting unit 33 sets the stop range based on the information acquired by the external information acquisition unit 13. The external information acquisition unit 13 acquires, from an external server, information on a location of a tourist spot or a location where an event such as a festival is held. In the third method, the stop range is automatically set regardless of the input of the driver, and the stop range is automatically updated and set.

The date and time setting unit 34 sets the date and time at which the alarm is stopped. Specifically, the date and time setting unit 34 usually sets a date and time at which a large number of distant vehicles are predicted to travel on a specific date and time such as an event such as a large-scale festival, although the distant vehicles usually do not travel. Here, a method for setting a date and time by the date and time setting unit 34 will be described. As a first method, the date and time setting unit 34 sets the date and time input by the driver of the own vehicle via the input unit 14. The driver inputs in advance, via the input unit 14, the date and time at which an event such as a festival is held. In the first method, the date and time is set according to the input of the driver. As a second method, the date and time setting unit 34 sets the date and time at which an event such as a festival is held when the driving assistance apparatus 30 is manufactured. In the second method, the date and time is set as a default. As a third method, the date and time setting unit 34 sets the date and time based on the information acquired by the external information acquisition unit 13. The external information acquisition unit 13 acquires, from an external server, information on the date and time at which an event such as a festival is held. In the third method, the date and time is automatically set regardless of the input of the driver, and the date and time is automatically updated and set. When the date and time setting unit 34 sets the date and time, the date and time and the stop range are associated with each other by the range setting unit 33 setting the stop range before and after the setting of the date and time. Therefore, for example, the date and time of an event and a venue of the event are set in association with each other.

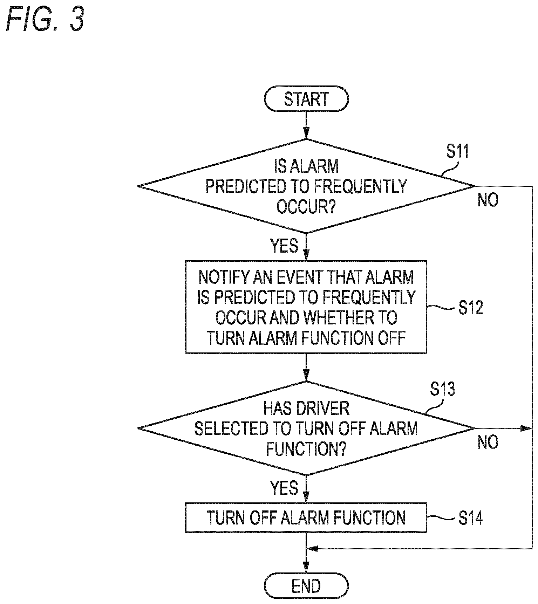

Next, processing according to the driving assistance apparatus 30 in the present embodiment will be described with reference to a flowchart in FIG. 3. The flowchart in FIG. 3 is implemented by the CPU of the ECU used as the driving assistance apparatus 30 executing the program stored in the memory. The flowchart in FIG. 3 is started when a power of the driving assistance apparatus 30 is turned on, and the alarm function by the alarm generation unit 31 is on at the start.

In S11, the alarm stop unit 32 determines whether the alarm from the alarm generation unit 31 is predicted to frequently occur. When it is predicted that the alarm frequently occurs, the processing proceeds to S12, and otherwise, the processing in the flowchart ends. Specifically, the alarm stop unit 32 determines whether the current location of the own vehicle is within the stop range set by the range setting unit 33. Here, the range setting unit 33 sets, as the stop range, a range indicating a location where a large number of distant vehicles are predicted to travel, such as a tourist spot. Therefore, when the current location of the own vehicle is within the stop range, the alarm from the alarm generation unit 31 is predicted to frequently occur. When the date and time is set in the date and time setting unit 34, the alarm stop unit 32 determines whether the current time is the date and time set by the date and time setting unit 34 and the current location of the own vehicle is within the stop range set by the range setting unit 33. Here, the date and time setting unit 34 sets a date and time at which a large number of distant vehicles are predicted to travel, such as a date and time when an event such as a festival is held. When the current time is the set date and time and the current location of the own vehicle is within the stop range, the alarm from the alarm generation unit 31 is predicted to frequently occur.

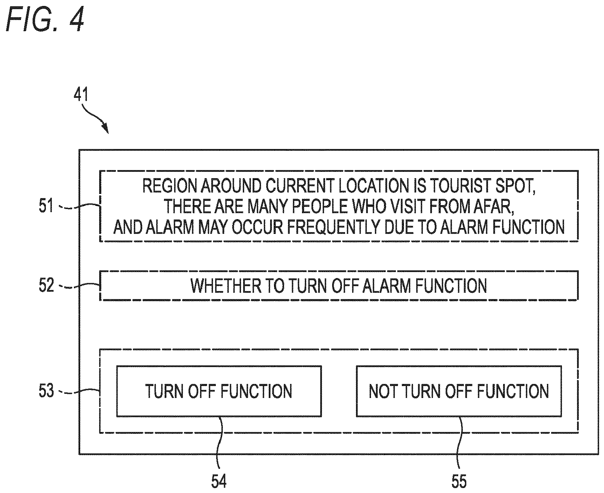

In S12, the alarm stop unit 32 notifies the driver of the own vehicle of an event determined to be predicted that an alarm from the alarm generation unit 31 frequently occurs and whether to stop the alarm from the alarm generation unit 31. FIG. 4 is a diagram showing an example of the notification from the alarm stop unit 32. Here, the display 41 has a first display column 51, a second display column 52, and a third display column 53.

The first display column 51 displays an event determined to be predicted that an alarm frequently occurs. The first display column 51 in FIG. 4 displays a message that "a region around the current location is one of tourist spots, there are many people who visit from afar, and an alarm may occur frequently due to the alarm function". This message is an example displayed when the date and time set by the date and time setting unit 34 is not associated with the stop range set by the range setting unit 33 and only the stop range is set by the range setting unit 33. The first display column 51 may display, for example, a message that "there is a festival today in a region around the current location, there are many people who visit from afar, and an alarm may occur frequently due to the alarm function". This message is displayed when the date and time set by the date and time setting unit 34 is associated with the stop range set by the range setting unit 33. In this way, by notifying the event determined to be predicted that an alarm frequently occurs, the driver can easily grasp a situation of the current location. The present invention is not limited to the notification of the event determined to be predicted that an alarm frequently occurs, and the alarm function may be automatically turned off without any notification.

The second display column 52 displays a content for checking the intention of the driver. The second display column 52 in FIG. 4 displays a message "whether to turn off the alarm function". The third display column 53 displays selection items for the driver to select the intention. The third display column 53 in FIG. 4 displays a selection item 54 "turn off the function" and a selection item 55 "not turn off the function". The driver touches a region of either of the selection items, so that the intention of the driver can be input.

When the alarm function is automatically turned off without checking the intention of the driver, the third display column 53 may be omitted, and the second display column 52 may display a message "turn off the alarm function". When the alarm function is automatically turned off without checking the intention of the driver, the first display column 51 and the third display column 53 may be omitted, and the second display column 52 may display a message "turn off the alarm function". When the alarm function is automatically turned off without checking the intention of the driver, all of the first display column 51, the second display column 52, and the third display column 53 may be omitted, that is, the processing in S12 and S13 to be described later may be omitted.

Returning to the flowchart in FIG. 3, the description will be given. In S 13, the alarm stop unit 32 determines whether the driver has selected to turn off the alarm function. Specifically, the alarm stop unit 32 determines that the driver has selected to turn off the alarm function by detecting the touch of the selection item 54 "turn off the function" of the selection items 54 and 55 displayed on the display 41, and determines that the driver has selected to turn on the alarm function by detecting the touch of the selection item 55 "not turn off the function". When the driver has selected to turn off the alarm function, the processing proceeds to S14, and otherwise, the processing in the flowchart ends.

In S14, the alarm stop unit 32 turns off the alarm function to stop the alarm from the alarm generation unit 31, thereby completing the processing. On the other hand, when the processing proceeds to the end without passing through S14, the processing from S11 is repeatedly performed at regular intervals.

In this way, according to the present embodiment, when it is predicted that an alarm frequently occurs to alert the presence of other vehicles unfamiliar with the current location, the alarm stop unit 32 stops the alarm from the alarm generation unit 31, so that the alarm from the alarm generation unit 31 can be prevented from frequently occurring. Therefore, it is possible to prevent the driver from feeling annoyed due to frequent alarms.

According to the present embodiment, when it is predicted that an alarm frequently occurs to alert the presence of other vehicles unfamiliar with the current location, the driver is notified that the alarm stop unit 32 automatically stops the alarm from the alarm generation unit 31. Therefore, the driver can recognize that the alarm is automatically stopped.

According to the present embodiment, when it is predicted that an alarm frequently occurs to alert the presence of other vehicles unfamiliar with the current location, the alarm stop unit 32 notifies the driver whether to stop the alarm from the alarm generation unit 31, and causes the driver to select whether to stop the alarm. Therefore, the alarm can be stopped according to the intention of the driver.

According to the present embodiment, when it is predicted that an alarm frequently occurs to alert the presence of other vehicles unfamiliar with the current location, the alarm stop unit 32 notifies the event determined to be predicted that an alarm frequently occurs and that the alarm from the alarm generation unit 31 is to be stopped. Therefore, the driver can recognize a reason why the alarm is automatically stopped.

According to the present embodiment, when it is predicted that an alarm frequently occurs to alert the presence of other vehicles unfamiliar with the current location, the alarm stop unit 32 notifies the event determined to be predicted that an alarm frequently occurs, and causes the driver to select whether to stop the alarm. Therefore, the driver can select whether to stop the alarm after considering the notified event.

According to the present embodiment, when the current location of the own vehicle is within the stop range set by the range setting unit 33, it is predicted that the alarm from the alarm generation unit 31 frequently occurs. Therefore, in a location where a large number of distant vehicles are predicted to travel, such as a tourist spot, it is possible to prevent the alarm from the alarm generation unit 31 from frequently occurring by setting the location in advance.

According to the present embodiment, when the current location of the own vehicle is within the stop range set by the range setting unit 33 at the date and time set by the date and time setting unit 34, it is predicted that the alarm from the alarm generation unit 31 frequently occurs. Therefore, in a location where a large number of distant vehicles are predicted to travel on a specific date and time such as an event such as a large-scale festival, it is possible to prevent the alarm from the alarm generation unit 31 from frequently occurring by setting the specific date and time and the location in advance.

According to the present embodiment, the range setting unit 33 sets the stop range based on information on a location visited by distant vehicles. The information is acquired from the outside of the own vehicle. Therefore, in a location where a large number of distant vehicles are predicted to travel, such as a tourist spot, the input of the driver can be reduced by automatically setting the location.

According to the present embodiment, the date and time setting unit 34 sets information on the date and time at which distant vehicles visit the location. The information is acquired from the outside of the own vehicle. Therefore, in a location where a large number of distant vehicles are predicted to travel on a specific date and time such as an event such as a large-scale festival, the input of the driver can be reduced by automatically setting the specific date and time and the location.

### Second Embodiment

In the first embodiment, the description has been given of a case in which the alarm from the alarm generation unit 31 is prevented from frequently occurring at a location where a large number of distant vehicles are predicted to travel, such as a location of a tourist spot or a location where an event such as a festival is held. In the present embodiment, the alarm stop unit 32 prevents the alarm from the alarm generation unit 31 from frequently occurring when the number of distant vehicles increases by chance and it is predicted that a large number of distant vehicles travel due to continuing of this situation.

The processing performed by the driving assistance apparatus 30 according to the present embodiment is different from that of the first embodiment in the processing in S11 and S14 in the flowchart in FIG. 3. Therefore, the processing in S11 and S14 will be described below, and the description of the other processing will be omitted as appropriate.

In S 11, the alarm stop unit 32 determines whether the alarm from the alarm generation unit 31 is predicted to frequently occur. Specifically, the alarm stop unit 32 determines whether the alarm is predicted to frequently occur, by determining whether, to the number of other vehicles for which information has been acquired by the other vehicle information acquisition unit 11, a ratio of the number of other vehicles to be a target of the alarm is larger than a predetermined ratio.

The alarm stop unit 32 may freely set at least one of the number (a parameter) of other vehicles for which information has been acquired by the other vehicle information acquisition unit 11 and the predetermined ratio by the input of the driver via the input unit 14, or may be set the at least one of the number and the predetermined ratio as a default. The alarm stop unit 32 may reset the number (the parameter) of other vehicles at predetermined time intervals, or may reset the number when the power of the driving assistance apparatus 30 is turned off. Here, as an example, the predetermined ratio is 20%, the number (the parameter) of other vehicles is 50, and the predetermined reset time interval is 1 hour. The alarm generation unit 31 generates an alarm for, among 50 other vehicles for which information has been acquired within 1 hour, every 10 other vehicles up to the 10th other vehicle to be a target of the alarm. The alarm stop unit 32 counts other vehicles to be a target of the alarm, and predicts that the alarm frequently occurs when the 11th vehicle is present as the other vehicle to be a target of the alarm.

When the ratio of other vehicles to be a target of the alarm is larger than the predetermined ratio, it is determined that the alarm is predicted to frequently occur, and the processing proceeds to S12. On the other hand, when the ratio of other vehicles to be a target of the alarm is equal to or less than the predetermined ratio, the alarm is predicted not to frequently occur, and the processing is ended.

The processing in S12 and S13 is the same as that of the first embodiment. In S14, the alarm stop unit 32 turns off the alarm function, stops the alarm from the alarm generation unit 31, and ends the processing. To give the description using an example described above, the alarm stop unit 32 counts other vehicles to be a target of the alarm, and stops the alarm from the alarm generation unit 31 when the 11th vehicle is present and the driver selects to turn off the alarm function. Therefore, the alarm for the 11th and subsequent other vehicles to be a target of the alarm is stopped. When 1 hour has elapsed as the predetermined time interval, the alarm stop unit 32 resets the number (the parameter) of other vehicles and the count of other vehicles to be a target of the alarm, and turns on the alarm function.

In this way, according to the present embodiment, even if it is unpredictable in advance and is accidental, when a large number of distant vehicles are predicted to travel according to a situation from the past to the current time, the alarm stop unit 32 stops the alarm from the alarm generation unit 31, so that it is possible to prevent the alarm from the alarm generation unit 31 from frequently occurring. Therefore, it is possible to prevent the driver from feeling annoyed due to frequent alarms.

Although the embodiments according to the present invention have been described above, the present invention is not limited to the embodiments described above. Modifications and the like can be made within the scope of the present invention, and a part of the embodiments and a part of the modifications may be combined with other embodiments.

In the first embodiment described above, the case has been described in which the alarm function is turned off in S14 in the flowchart in FIG. 3. Alternatively, after turning off the alarm function, the alarm stop unit 32 may turn the alarm function back on when a predetermined condition is satisfied. For example, after turning off the alarm function, the alarm stop unit 32 determines whether the current location of the own vehicle is outside the stop range set by the range setting unit 33. When the current location is outside the stop range, the alarm stop unit 32 turns the alarm function back on, and when the current location is within the stop range, the alarm stop unit 32 keeps the alarm function off. For example, when the date and time is set in the date and time setting unit 34, the alarm stop unit 32 determines whether the current time is outside the date and time set by the date and time setting unit 34. When the current time is outside the date and time, the alarm stop unit 32 turns the alarm function back on, and when the current time is within the date and time, the alarm stop unit 32 keeps the alarm function off. In this way, by turning the alarm function back on when the predetermined condition is satisfied after turning off the alarm function, it is possible to prevent a situation in which no alarm occurs to alert the driver of the own vehicle even though the current location where the own vehicle travels is a location where the alarm does not frequently occur and unfamiliar vehicles drive around the own vehicle.

### REFERENCE SIGNS LIST

1: vehicle (own vehicle)
2: other vehicles
11: other vehicle information acquisition unit
12: road information acquisition unit
13: external information acquisition unit
14: input unit
21: notification unit
30: driving assistance apparatus
31: alarm generation unit
32: alarm stop unit
33: range setting unit
34: date and time setting unit
41: display
42: speaker
43: message
44: voice

## Claims

1. A driving assistance apparatus (30) comprising:
an alarm generation unit (31) configured to generate an alarm in order to alert a driver of an own vehicle (1) when a current location of the own vehicle (1) and a location where another vehicle (2) is mainly used are separated by a predetermined distance or more; and
an alarm stop unit (32) configured to stop the alarm from the alarm generation unit (31) when it is predicted that the alarm from the alarm generation unit (31) frequently occurs.

2. The driving assistance apparatus according to claim 1,
wherein, when the alarm from the alarm generation unit is predicted to frequently occur, the alarm stop unit notifies the driver of the own vehicle to stop the alarm from the alarm generation unit, and stops the alarm from the alarm generation unit.

3. The driving assistance apparatus according to claim 1,
wherein, when the alarm from the alarm generation unit is predicted to frequently occur, the alarm stop unit notifies the driver of the own vehicle whether to stop the alarm from the alarm generation unit, and stops the alarm from the alarm generation unit when the driver selects to stop the alarm.

4. The driving assistance apparatus according to claim 1,
wherein, when the alarm from the alarm generation unit is predicted to frequently occur, the alarm stop unit notifies the driver of the own vehicle of an event determined to be predicted that the alarm frequently occurs and that the alarm from the alarm generation unit is to be stopped, and stops the alarm from the alarm generation unit.

5. The driving assistance apparatus according to claim 1,
wherein, when the alarm from the alarm generation unit is predicted to frequently occur, the alarm stop unit notifies the driver of the own vehicle of an event determined to be predicted that the alarm frequently occurs and whether to stop the alarm from the alarm generation unit, and stops the alarm from the alarm generation unit when the driver selects to stop the alarm.

6. The driving assistance apparatus according to any one of claims 1 to 5, further comprising
a range setting unit configured to set a stop range,
wherein, when the current location of the own vehicle is within the stop range set by the range setting unit, the alarm stop unit predicts that the alarm from the alarm generation unit frequently occurs.

7. The driving assistance apparatus according to claim 6, further comprising
a date and time setting unit configured to set a date and time,
wherein, when the current location of the own vehicle is within the stop range set by the range setting unit at the date and time set by the date and time setting unit, the alarm stop unit predicts that the alarm from the alarm generation unit frequently occurs.

8. The driving assistance apparatus according to any one of claims 1 to 5, further comprising
a range setting unit configured to set a stop range based on information on a location visited by a distant vehicle, the information being acquired from an outside of the own vehicle,
wherein, when the current location of the own vehicle is within the stop range set by the range setting unit, the alarm stop unit predicts that the alarm from the alarm generation unit frequently occurs.

9. The driving assistance apparatus according to claim 8, further comprising
a date and time setting unit configured to set information on a date and time at which a distant vehicle visits the location, the information being acquired from the outside of the own vehicle,
wherein, when the current location of the own vehicle is within the stop range set by the range setting unit at the date and time set by the date and time setting unit, the alarm stop unit predicts that the alarm from the alarm generation unit frequently occurs.

10. The driving assistance apparatus according to any one of claims 1 to 5,
wherein, when a ratio of other vehicles to be a target of the alarm to a plurality of other vehicles is larger than a predetermined ratio, the alarm stop unit predicts that the alarm from the alarm generation unit frequently occurs.
